# EUROPEAN PATENT SPECIFICATION

(11) **EP 4 025 003 B1**
(45) Date of publication and mention of the grant of the patent: **23.04.2025**
(21) Application number: 19945255.8
(22) Date of filing: 12.09.2019
(51) Int. Cl.: H04W 48/20, H04W 76/18, H04W 48/14

(54) **REDICTECTION METHOD AND RELATED DEVICE**
WEITERLEITUNGSVERFAHREN UND ZUGEHÖRIGE VORRICHTUNG
PROCÉDÉ DE REDIRECTION ET DISPOSITIF ASSOCIÉ

(43) Date of publication of application: 06.07.2022
(73) Proprietor: Huawei Technologies Co., Ltd., Longgang District Shenzhen, Guangdong 518129 (CN)
(72) Inventor: YE, Maorong, Shenzhen, Guangdong 518129 (CN); SHAN, Baokun, Shenzhen, Guangdong 518129 (CN)
(74) Representative: Körber, Martin Hans
(86) International application number: PCT/CN2019/105795
(87) International publication number: WO 2021/046826

(56) References cited:
- EP-A1- 2 670 196
- EP-A1- 2 861 032
- WO-A1-2013/016711
- WO-A2-2009/025494
- CN-A- 101 400 143
- CN-A- 103 384 410
- US-A1- 2008 102 784
- SONY: "NB-IOT Measurements for reselection and redirection", vol. RAN WG2, no. St. Julian's, Malta; 20160215 - 20160219, 14 February 2016 (2016-02-14), XP051055122, Retrieved from the Internet <URL:http://www.3gpp.org/ftp/Meetings_3GPP_SYNC/RAN2/Docs/> [retrieved on 20160214]
- ERICSSON: "Dedicated frequency offset for NB-IoT", vol. RAN WG2, no. Athens, Greece; 20170213 - 20170217, 12 February 2017 (2017-02-12), XP051211766, Retrieved from the Internet <URL:http://www.3gpp.org/ftp/Meetings_3GPP_SYNC/RAN2/Docs/> [retrieved on 20170212]
- CHINA UNICOM: "Evaluation of CS Fallback with call redirection enhancement", 3GPP DRAFT; R3-132171 EVALUATION ON CALL REDIRECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. San Francisco, U.S; 20131111 - 20131115, 13 November 2013 (2013-11-13), Mobile Competence Centre ; 650, route des Lucioles ; F-06921 Sophia-Antipolis Cedex ; France, XP050738386

## Description

### TECHNICAL FIELD

This application relates to the field of wireless network technologies, and in particular, to a redirection method and a related device.

### BACKGROUND

A cellular-based narrowband internet of things (narrow band internet of things, NB-IoT) becomes an important branch of an internet of everything network. The NB-IoT is constructed from a cellular network and consumes bandwidth of only approximately 180 kHz. The NB-IoT is an emerging technology in the IoT field, supports a cellular data connection of a low-power device in a wide area network, and is also referred to as a low-power wide area network (low-power wide-area network, LPWA). The NB-IoT supports an efficient connection of a device with long standby time and a relatively high requirement for a network connection. In the NB-IoT network, redirection is a technology of directing a service of a terminal device (user equipment, UE) from a current cell to another different carrier cell based on redirection information carried in a radio resource control (radio resource control, RRC) release message. However, because a service characteristic of the NB-IoT determines that a time interval between two services of the NB-IoT may be an hour level or even longer, load sharing is not timely. In addition, in a congestion scenario, because the UE may not be able to perform access, load sharing cannot be triggered, and consequently, congestion is aggravated.

WO 2009/025494 A2 discloses a method of performing cell reselection in a wireless communication system including receiving cell load information and performing cell reselection by using the cell load information.

SONY: "NB-IOT Measurements for reselection and redirection", 3GPP DRAFT; R2-161138-NBIOT MEAS, 3RD GENERATION PARTNERSHIP PROJECT (3GPP), MOBILE COMPETENCE CENTRE; 650, ROUTE DES LUCIOLES; F-06921 SOPHIAANTIPOLIS CEDEX; FRANCE, vol. RAN WG2, no. St. Julian's, Malta; 20160215-20160219 discloses measurements to support redirection, to avoid blindly attempting to redirect a UE in radio access for cellular IoT.

EP 2 861 032 A1 discloses a method for controlling re-direction between heterogeneous mobile communication systems, comprising a step in which a terminal, a connection request of which is rejected from a first communication system (UTRAN), receives, from a second communication system to which the terminal intends to connect, information indicating that the second communication system does not support the terminal; a step of setting information for preventing re-direction to the second communication system; and a step of transmitting, to the first communication system, a request for connection to the first communication system, which includes the information.

EP 2 670 196 A1 discloses a communication system and method including a communication control device and a mobile station which is connectable to multiple radio communication systems of different radio access technologies (RATs), a mobile station, and a switching control method..

EP 2 670 196 A1 discloses techniques for efficiently handling emergency calls in a wireless communication system. The techniques are executed in a wireless communication device (WCD) that is interoperable between RATs. The emergency call is redirected to another RAT or frequency following an unsuccessful emergency call. The WCD searches acceptable cells of any public land mobile network and attempts to place the emergency call on the cell with the highest power.

ERICSSON: "Dedicated frequency offset for NB-loT", 3GPP DRAFT; R2-1701006 DEDICATED FREQUENCY OFFSET FOR NB-IOT, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG2, no. Athens, Greece; 20170213-20170217 discloses a dedicated frequency offset in the redirection info for NBloT.

### SUMMARY

This application provides a redirection method and a related device, to implement redirection in an access process, and implement timely network load sharing and network load balancing. The invention is defined in the independent claims. Additional features of the invention are provided in the dependent claims.

### BRIEF DESCRIPTION OF DRAWINGS

To describe the technical solutions in the embodiments of this application or in the background more clearly, the following describes the accompanying drawings for describing the embodiments of this application or the background.
FIG. 1 is a schematic diagram of a structure of a communication system according to an embodiment of this application;
FIG. 2 is a schematic flowchart of a redirection method according to an embodiment of this application;
FIG. 3 is a schematic flowchart of another redirection method according to an embodiment of this application;
FIG. 4 is a schematic diagram of a structure of a first redirection apparatus according to an embodiment of this application;
FIG 5 is a schematic diagram of a structure of a second redirection apparatus according to an embodiment of this application;
FIG 6 is a schematic diagram of a structure of a terminal device according to an embodiment of this application; and
FIG 7 is a schematic diagram of a structure of a network device according to an embodiment of this application.

### DESCRIPTION OF EMBODIMENTS

The following describes the embodiments of this application with reference to the accompanying drawings in the embodiments of this application.

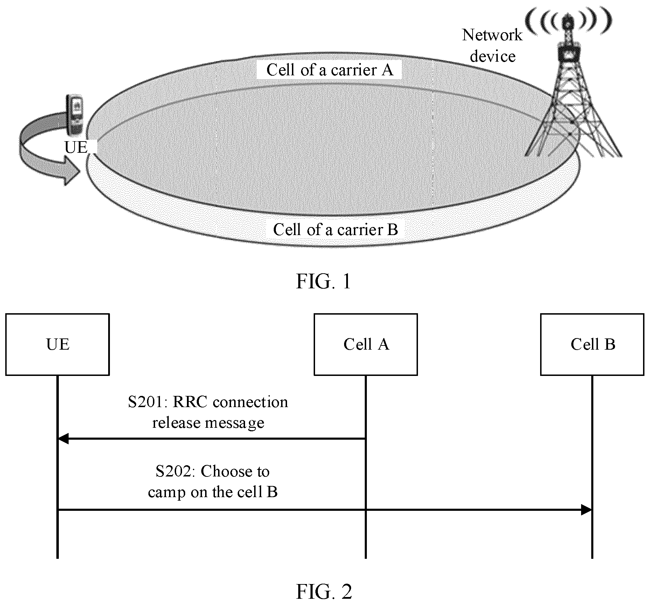

FIG. 1 is a schematic diagram of a structure of a communication system according to an embodiment of this application. The communication system may include a network device and a terminal device. The communication system may be located in an NB-IoT network, for example, an inter-frequency co-coverage networking (in other words, a same area covers different carrier frequencies) scenario. As shown in FIG. 1, UE is located in both a cell of a carrier A and a cell of a carrier B. The two cells may belong to a same network device or different network devices. It should be understood that the communication system to which the method in the embodiments of this application is applicable may include more or fewer network devices or terminal devices. The network device or the terminal device may be hardware, may be software obtained through functional division, or may be a combination thereof. The network device and the terminal device may communicate with each other via another device or network element. The network device may be a base station, an access point, a relay node, a base transceiver station (base transceiver station, BTS), a NodeB (NodeB, NB), an evolved NodeB (evolved NodeB, eNB), or a 5G base station, and is a device that is in an access network and that communicates with a wireless terminal on an air interface by using one or more sectors. By converting a received air interface frame into an IP packet, the network device may be used as a router between the terminal device and another part of the access network, and the access network may include an internet protocol network. The network device may further coordinate attribute management of the air interface. The terminal device may be a cellular phone, a smartphone, a portable computer, a handheld communication device, a handheld computing device, a satellite radio apparatus, a global positioning system, a personal digital assistant (personal digital assistant, PDA), and/or any other suitable device configured to perform communication in a wireless communication system. In the communication system, a public land mobile network (public land mobile network, PLMN), a device-to-device (device-to-device, D2D) network, a machine to machine (machine to machine, M2M) network, an internet of things (internet of things, IoT), or another network may be used. The method according to the embodiments of this application may be applied to the communication system shown in FIG. 1.

FIG 2 is a schematic flowchart of a redirection method according to an embodiment of this application. Details are as follows:
S201: UE establishes an RRC connection in a cell A and performs service processing. After service processing is completed, the cell A triggers a redirection procedure, an eNB sends an RRC release (release) message to the UE, and the UE receives the RRC release message sent by the eNB. The RRC release message carries redirection information, and the redirection information includes a carrier frequency.
S202: The UE chooses, based on the redirection information, to camp on a cell B corresponding to the carrier frequency.

However, the foregoing technical solutions have the following disadvantages: First, a service frequency of a mainstream service model of an NB-IoT is relatively low, and a time interval between two services is usually at a level of several hours or even one day. Redirection occurs in a release procedure after a service of the UE is completed, and load can be shared only in a next service of the UE, and a load sharing delay is large. Second, in an inter-frequency co-coverage scenario, if congestion occurs in the cell A, an RRC connection of the UE may fail to be established or may be rejected, and the RRC connection cannot be established. In this case, an RRC release procedure does not exist, and therefore redirection cannot be triggered. However, because access of the UE fails, the UE continuously initiates an access attempt. Consequently, continuous congestion is aggravated. To resolve the foregoing technical problems, the embodiments of this application provide the following solutions.

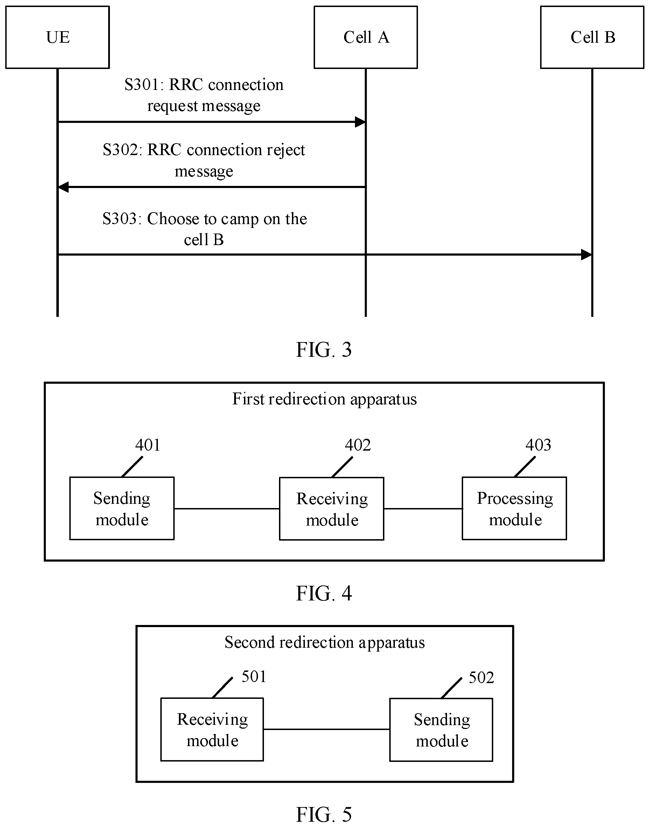

FIG 3 is a schematic flowchart of a redirection method according to an embodiment of this application. The method includes but is not limited to the following steps.

S301: A terminal device sends a radio resource control RRC connection request message (RRC connection request) to a network device, and the network device receives the RRC connection request message sent by the terminal device, where the RRC connection request message is used to request to establish an RRC

Optionally, after the terminal device sends the RRC connection request message, if the first cell allows the terminal device to access, the network device may send an RRC connection success message to the terminal device, to indicate that an RRC connection between the terminal device and the network device is successfully established and data may be transmitted based on the established RRC connection.

S302: The network device sends an RRC connection reject message (RRC connection reject) to the terminal device, and the terminal device receives the RRC connection reject message sent by the network device, where the RRC connection reject message carries redirection information (redirected carrier info).

In specific implementation, when load of the first cell exceeds a first preset threshold or load of a core network in which the first cell is located exceeds a second preset threshold, the network device sends the RRC connection reject message to the terminal device. Alternatively, when load of the first cell exceeds a first preset threshold or load of a core network in which the first cell is located exceeds a second preset threshold, the network device sends the RRC connection reject message to the terminal device.

The redirection information includes a plurality of carrier frequencies. The redirection information may include a redirection carrier dedicated offset (redirected carrier offset dedicated), and the redirection carrier dedicated offset is added to reference signal received power (reference signal receiving power, RSRP) of one of the plurality of carrier frequencies to reduce a probability that a cell corresponding to the carrier frequency is chosen. The redirection information includes extended waiting time (extended wait time), and the extended waiting time indicates waiting duration in which the terminal device searches the first cell again to establish an RRC connection. The redirection information may further include other information, including but not limited to the foregoing several types of information.

S303: The terminal device chooses, based on the redirection information, to camp on a second cell.

In specific implementation, the redirection information includes a plurality of carrier frequencies, and the terminal device searches a plurality of cells based on the plurality of carrier frequencies, and chooses to camp on a second cell corresponding to a target carrier frequency in the plurality of carrier frequencies. Further, the terminal device may obtain reference signal received power RSRP corresponding to each of the plurality of carrier frequencies, and choose, based on the RSRP, to camp on the second cell corresponding to the target carrier frequency in the plurality of carrier frequencies. For example, a cell corresponding to largest RSRP may be chosen for camping. After the carrier frequency of the second cell is chosen, the RRC connection request message may be sent to a network device in which the second cell is located.

If the terminal device finds no appropriate cell to camp on after searching one or more carrier frequencies, the terminal device chooses to camp on any cell.

Optionally, if duration in which the terminal device searches a cell based on one of the carrier frequencies exceeds preset duration, searching in the cell is stopped, and the terminal device may choose a next carrier frequency and search another cell to camp on, or if duration of searching for a cell based on the plurality of carrier frequencies exceeds preset duration, the terminal device may re-choose to camp on the first cell. The preset duration may be maximum time allowed by the network device for searching. In addition, after the terminal device sends the RRC connection request message to a specific cell for a first time, the extended waiting time is required before the terminal device can send the RRC connection request message to the cell for a second time.

It should be noted that when searching the plurality of carrier frequencies, if the terminal device does not find a cell based on one of the carrier frequencies or a found cell does not meet a camping requirement (for example, RSRP is relatively small), the terminal device may add a redirection carrier dedicated offset to RSRP corresponding to the carrier frequency, to improve difficulty of choosing the carrier frequency. A larger redirection carrier dedicated offset leads to a smaller probability that a cell corresponding to the carrier frequency is chosen. The terminal device may start to search a next cell until an appropriate cell to camp on is found.

In this embodiment of this application, the redirection information is added to the RRC connection reject message, so that redirection may be triggered in an access process of the terminal device, and therefore, load is shared in a timely manner. In a case of network congestion, the terminal device is redirected to a cell with relatively light load, to implement network load balancing. In this way, redirection is more flexible and efficient.

The foregoing describes in detail the method in the embodiments of this application. The following provides apparatuses in the embodiments of this application.

FIG. 4 is a schematic diagram of a structure of a first redirection apparatus according to an embodiment of this application. The first redirection apparatus may include a sending module 401, a receiving module 402, and a processing module 403. Detailed descriptions of the units are as follows:
The sending module 401 is configured to send a radio resource control RRC connection request message to a network device, where the RRC connection request message is used to request to establish an RRC connection in a first cell.

The receiving module 402 is configured to receive an RRC connection reject message sent by the network device, where the RRC connection reject message carries redirection information.

The processing module 403 is configured to choose, based on the redirection information, to camp on a second cell.

Optionally, the redirection information includes a plurality of carrier frequencies, and the processing module 403 is configured to: search the plurality of carrier frequencies, and choose to camp on a second cell corresponding to a target carrier frequency in the plurality of carrier frequencies.

Optionally, the processing module 403 is further configured to: obtain reference signal received power RSRP corresponding to each of the plurality of carrier frequencies, and choose, based on the RSRP, to camp on the second cell corresponding to the target carrier frequency in the plurality of carrier frequencies.

The redirection information includes a redirection carrier dedicated offset, and the redirection carrier dedicated offset is added to RSRP of one of the plurality of carrier frequencies to reduce a probability that a cell corresponding to the carrier frequency is chosen.

The redirection information includes extended waiting time, and the extended waiting time indicates waiting duration in which the terminal device searches the first cell again to establish an RRC connection.

It should be noted that, for implementation of each module, refer to the corresponding description in the method embodiment shown in FIG. 3, to perform the method and the function performed by the terminal device in the foregoing embodiment.

FIG 5 is a schematic diagram of a structure of a second redirection apparatus according to an embodiment of this application. The first redirection apparatus may include a receiving module 501 and a processing module 502. Detailed descriptions of the units are as follows:
The receiving module 501 is configured to receive a radio resource control RRC connection request message sent by a terminal device, where the RRC connection request message is used to request to establish an RRC connection in a first cell.

The sending module 502 is configured to send an RRC connection reject message to the terminal device, where the RRC connection reject message carries redirection information, and the redirection information indicates the terminal device to choose to camp on a second cell.

The redirection information includes a plurality of carrier frequencies, and the plurality of carrier frequencies are used by the terminal device to perform searching and choose to camp on a second cell corresponding to a target carrier frequency.

The redirection information includes a redirection carrier dedicated offset, and the redirection carrier dedicated offset is added to RSRP of one of the plurality of carrier frequencies to reduce a probability that a cell corresponding to the carrier frequency is chosen.

The redirection information includes extended waiting time, and the extended waiting time indicates waiting duration in which the terminal device searches the first cell again to establish an RRC connection.

Optionally, the sending module 502 is further configured to: when load of the first cell exceeds a first preset threshold or load of a core network in which the first cell is located exceeds a second preset threshold, send the RRC connection reject message to the terminal device.

It should be noted that, for implementation of each module, refer to the corresponding description in the method embodiment shown in FIG. 3, to perform the method and the function performed by the network device in the foregoing embodiment.

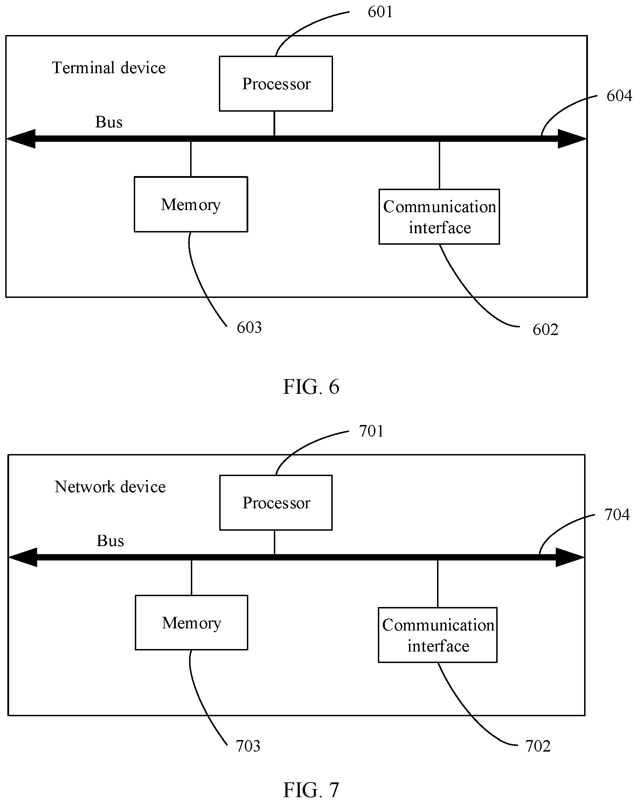

FIG 6 is a schematic diagram of a structure of a terminal device according to an embodiment of this application. As shown in FIG. 6, the terminal device may include at least one processor 601, at least one communication interface 602, at least one memory 603, and at least one communication bus 604.

The processor 601 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination for implementing a computing function, for example, a combination including one or more microprocessors, or a combination of a digital signal processor and a microprocessor. The communication bus 604 may be a peripheral component interconnect PCI bus, an extended industry standard architecture EISA bus, or the like. The bus may be classified into an address bus, a data bus, a control bus, or the like. For ease of representation, only one thick line is used to represent the bus in FIG. 6, but this does not mean that there is only one bus or only one type of bus. The communication bus 604 is configured to implement connection and communication between these components. The communication interface 602 of the device in this embodiment of this application is configured to perform signaling or data communication with another node device. The memory 603 may include a volatile memory, for example, a nonvolatile dynamic random access memory (nonvolatile random access memory, NVRAM), a phase-change random access memory (phase-change RAM, PRAM), or a magnetoresistive random access memory (magnetoresistive RAM, MRAM). The memory may further include a nonvolatile memory, for example, at least one magnetic disk storage device, an electrically erasable programmable read-only memory (electrically erasable programmable read-only memory, EEPROM), a flash storage device such as a NOR flash memory (NOR flash memory) or a NAND flash memory (NAND flash memory), or a semiconductor device such as a solid-state drive (solid-state drive, SSD). Optionally, the memory 603 may be at least one storage apparatus that is located away from the foregoing processor 601. Optionally, the memory 603 may further store a group of program code, and the processor 601 may optionally further execute a program executed in the memory 603.

A radio resource control RRC connection request message is sent to a network device, where the RRC connection request message is used to request to establish an RRC connection in a first cell.

An RRC connection reject message sent by the network device is received, where the RRC connection reject message carries redirection information.

A second cell is chosen based on the redirection information to camp on.

The processor 601 is further configured to perform the following operation:
searching the plurality of carrier frequencies, and choosing to camp on a second cell corresponding to a target carrier frequency in the plurality of carrier frequencies.

The processor 601 is further configured to perform the following operations:
obtaining reference signal received power RSRP corresponding to each of the plurality of carrier frequencies; and
choosing, based on the RSRP, to camp on the second cell corresponding to the target carrier frequency in the plurality of carrier frequencies.

The redirection information includes a redirection carrier dedicated offset, and the redirection carrier dedicated offset is added to RSRP of one of the plurality of carrier frequencies to reduce a probability that a cell corresponding to the carrier frequency is chosen.

The redirection information includes extended waiting time, and the extended waiting time indicates waiting duration in which the terminal device searches the first cell again to establish an RRC connection.

Further, the processor may further cooperate with the memory and the communication interface to perform operations performed by the terminal device in the foregoing embodiments of this application.

FIG 7 is a schematic diagram of a structure of a network device according to an embodiment of this application. As shown in the figure, the network device may include at least one processor 701, at least one communication interface 702, at least one memory 703, and at least one communication bus 704.

The processor 701 may be the various types of processors described above. The communication bus 704 may be a peripheral component interconnect PCI bus, an extended industry standard architecture EISA bus, or the like. The bus may be classified into an address bus, a data bus, a control bus, or the like. For ease of representation, only one thick line is used to represent the bus in FIG. 7, but this does not mean that there is only one bus or only one type of bus. The communication bus 704 is configured to implement connection and communication between these components. The communication interface 702 of the device in this embodiment of this application is configured to perform signaling or data communication with another node device. The memory 703 may be the various types of memories described above. Optionally, the memory 703 may be at least one storage apparatus that is away from the processor 701. The memory 703 stores a group of program code, and the processor 701 executes a program that is in the memory 703 and that is executed by the foregoing network device.

A radio resource control RRC connection request message sent by a terminal device is received, where the RRC connection request message is used to request to establish an RRC connection in a first cell.

An RRC connection reject message is sent to the terminal device, where the RRC connection reject message carries redirection information, and the redirection information indicates the terminal device to choose to camp on a second cell.

The redirection information includes a plurality of carrier frequencies, and the plurality of carrier frequencies are used by the terminal device to perform searching and choose to camp on a second cell corresponding to a target carrier frequency.

The redirection information includes a redirection carrier dedicated offset, and the redirection carrier dedicated offset is added to RSRP of one of the plurality of carrier frequencies to reduce a probability that a cell corresponding to the carrier frequency is chosen.

The redirection information includes extended waiting time, and the extended waiting time indicates waiting duration in which the terminal device searches the first cell again to establish an RRC connection.

The processor 601 is further configured to perform the following operation:
when load of the first cell exceeds a first preset threshold or load of a core network in which the first cell is located exceeds a second preset threshold, sending the RRC connection reject message to the terminal device.

Further, the processor may further cooperate with the memory and the communication interface to perform operations performed by the network device in the foregoing embodiments of this application.

An embodiment of this application further provides a chip system. The chip system includes a processor, configured to support a network device or a terminal device in implementing the functions involved in any one of the foregoing embodiments, for example, generating or processing data and/or information involved in the foregoing methods. In a possible design, the chip system may further include a memory, and the memory is configured to store program instructions and data that are necessary for the network device or the terminal device. The chip system may include a chip, or may include a chip and another discrete component.

An embodiment of this application further provides a processor, configured to be coupled to a memory, and configured to perform any method and function related to a network device or a terminal device in any one of the foregoing embodiments.

An embodiment of this application further provides a computer program product that includes instructions. When the computer program product is run on a computer, the computer is enabled to perform any method and function related to a network device or a terminal device in any one of the foregoing embodiments.

An embodiment of this application further provides an apparatus, configured to perform any method and function related to a network device or a terminal device in any one of the foregoing embodiments.

An embodiment of this application further provides a wireless communication system, and the system includes at least one network device and at least one terminal device that are involved in any one of the foregoing embodiments.

All or some of the foregoing embodiments may be implemented by using software, hardware, firmware, or any combination thereof. When software is used for implementation, all or some of the embodiments may be implemented in a form of a computer program product. The computer program product includes one or more computer instructions. When the computer program instructions are loaded and executed on a computer, the procedure or functions according to the embodiments of this application are all or partially generated. The computer may be a general-purpose computer, a dedicated computer, a computer network, or another programmable apparatus. The computer instructions may be stored in a computer readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

The objectives, technical solutions, and beneficial effects of this application are further described in detail in the foregoing specific implementations.

## Claims

1. A redirection method, wherein the method is applied to a narrowband internet of things network, and the method comprises:
sending (S301), by a terminal device, a radio resource control, RRC, connection request message to a network device, wherein the RRC connection request message is used to request to establish an RRC connection in a first cell;
receiving (S302), by the terminal device, an RRC connection reject message sent by the network device, wherein the RRC connection reject message carries redirection information, wherein the redirection information comprises a plurality of carrier frequencies; and
choosing (S303), by the terminal device based on the redirection information, to camp on a second cell, comprising:
searching, by the terminal device, the plurality of carrier frequencies, and choosing to camp on a second cell corresponding to a target carrier frequency in the plurality of carrier frequencies; and
if the terminal device finds no appropriate cell to camp on after searching the plurality of carrier frequencies, the terminal device chooses to camp on any cell.

2. The method according to claim 1, wherein the searching, by the terminal device, the plurality of carrier frequencies, and choosing to camp on a second cell corresponding to a target carrier frequency in the plurality of carrier frequencies comprises:
obtaining, by the terminal device, reference signal received power, RSRP, corresponding to each of the plurality of carrier frequencies; and
choosing, by the terminal device based on the RSRP, to camp on the second cell corresponding to the target carrier frequency in the plurality of carrier frequencies.

3. The method according to claim 2, wherein the redirection information comprises a redirection carrier dedicated offset, and the terminal device adds the redirection carrier dedicated offset to RSRP of one of the plurality of carrier frequencies to reduce a probability that a cell corresponding to the carrier frequency is chosen.

4. The method according to any one of claims 1 to 3, wherein the redirection information comprises extended waiting time, and the extended waiting time indicates a time that the terminal device waits before searching the first cell again to establish an RRC connection.

5. A terminal device, comprising units adapted to perform the method according to any one of claims 1-4.

6. A computer-readable storage medium, wherein the computer-readable storage medium stores instructions, and when the instructions are run on a terminal device cause the terminal device to perform the method according to any one of claims 1 to 4.

7. A computer program product comprising instructions, wherein when the computer program product runs on a terminal device causes the terminal device to perform the method according to any one of claims 1 to 4.

## Patentansprüche

1. Weiterleitungsverfahren, wobei das Verfahren bei einem Schmalbandnetzwerk des Internets der Dinge angewendet wird und das Verfahren umfasst:
Senden (S301) einer Radio-Resource-Control(RRC)-Verbindungsanforderungsnachricht durch ein Endgerät an eine Netzwerkvorrichtung, wobei die RRC-Verbindungsanforderungsnachricht dazu verwendet wird, in einer ersten Zelle die Herstellung einer RRC-Verbindung anzufordern;
Empfangen (S302) einer von der Netzwerkvorrichtung gesendeten RRC-Verbindungsablehnungsnachricht durch das Endgerät, wobei die RRC-Verbindungsablehnungsnachricht Weiterleitungsinformationen trägt, wobei die Weiterleitungsinformationen eine Vielzahl von Trägerfrequenzen umfassen; und
auf Grundlage der Weiterleitungsinformationen, Auswählen (S303), durch das Endgerät, auf einer zweiten Zelle zu campieren, das umfasst:
Durchsuchen der Vielzahl von Trägerfrequenzen, durch das Endgerät, und Auswählen, auf einer einer Ziel-Trägerfrequenz der Vielzahl von Trägerfrequenzen entsprechenden zweiten Zelle zu campieren; und
falls das Endgerät nach dem Durchsuchen der Vielzahl von Trägerfrequenzen keine geeignete Zelle zum Campieren findet, wählt das Endgerät aus, auf einer beliebigen Zelle zu campieren.

2. Verfahren nach Anspruch 1, wobei das Durchsuchen der Vielzahl von Trägerfrequenzen durch das Endgerät und das Auswählen, auf einer einer Ziel-Trägerfrequenz der Vielzahl von Trägerfrequenzen entsprechenden zweiten Zelle zu campieren, umfasst:
Erlangen der jeder der Vielzahl von Trägerfrequenzen entsprechenden Referenzsignal-Empfangsleistung (RSRP), durch das Endgerät; und
auf Grundlage der RSRP, Auswählen, durch das Endgerät, auf der Ziel-Trägerfrequenz der der Vielzahl von Trägerfrequenzen entsprechenden zweiten Zelle zu campieren.

3. Verfahren nach Anspruch 2, wobei die Weiterleitungsinformationen einen für den Weiterleitungsträger spezifischen Versatz umfassen und das Endgerät den für den Weiterleitungsträger spezifischen Versatz zu der RSRP einer der Vielzahl von Trägerfrequenzen addiert, um die Wahrscheinlichkeit zu verringern, dass eine Zelle ausgewählt wird, die der Trägerfrequenz entspricht.

4. Verfahren nach einem der Ansprüche 1 bis 3, wobei die Weiterleitungsinformationen eine verlängerte Wartezeit umfassen und die verlängerte Wartezeit eine Zeit angibt, die das Endgerät wartet, bevor es die erste Zelle erneut zum Herstellen einer RRC-Verbindung durchsucht.

5. Endgerät, das Einheiten umfasst, die dazu geeignet sind, das Verfahren nach einem der Ansprüche 1 bis 4 durchzuführen.

6. Computerlesbares Speicherungsmedium, wobei auf dem computerlesbaren Speicherungsmedium Anweisungen gespeichert sind und die Anweisungen, wenn sie auf einem Endgerät ausgeführt werden, das Endgerät veranlassen, das Verfahren nach einem der Ansprüche 1 bis 4 durchzuführen.

7. Computerprogrammprodukt, das Anweisungen umfasst, wobei das Computerprogrammprodukt, wenn es auf einem Endgerät ausgeführt wird, das Endgerät veranlasst, das Verfahren nach einem der Ansprüche 1 bis 4 durchzuführen.

## Revendications

1. Procédé de réacheminement, dans lequel le procédé est appliqué à un réseau à bande étroite de l'Internet des objets, et le procédé comprend :
l'envoi (S301), par un dispositif terminal, d'un message de demande de connexion de commande des ressources radio, RRC, à un dispositif de réseau, dans lequel le message de demande de connexion RRC est utilisé pour demander l'établissement d'une connexion RRC dans une première cellule ;
la réception (S302), par le dispositif terminal, d'un message de rejet de connexion RRC envoyé par le dispositif de réseau, dans lequel le message de rejet de connexion RRC contient des informations de réacheminement, dans lequel les informations de réacheminement comprennent une pluralité de fréquences porteuses ; et
la sélection (S303), par le dispositif terminal, sur la base des informations de réacheminement, d'une mise en attente sur une seconde cellule, comprenant :
la recherche, par le dispositif terminal, dans la pluralité de fréquences porteuses, et la sélection d'une mise en attente sur une seconde cellule correspondant à une fréquence porteuse cible dans la pluralité de fréquences porteuses ; et
si le dispositif terminal ne trouve aucune cellule appropriée pour une mise en attente après avoir recherché dans la pluralité de fréquences porteuses, le dispositif terminal sélectionne une mise en attente sur une quelconque cellule.

2. Procédé selon la revendication 1, dans lequel la recherche, par le dispositif terminal, dans la pluralité de fréquences porteuses, et la sélection d'une mise en attente sur une seconde cellule correspondant à une fréquence porteuse cible dans la pluralité de fréquences porteuses comprend :
l'obtention, par le dispositif terminal, d'une puissance de réception de signal de référence, RSRP, correspondant à chacune de la pluralité de fréquences porteuses ; et
la sélection, par le dispositif terminal, sur la base de la RSRP, d'une mise en attente sur la seconde cellule correspondant à la fréquence porteuse cible dans la pluralité de fréquences porteuses.

3. Procédé selon la revendication 2, dans lequel les informations de réacheminement comprennent un décalage dédié à la porteuse de réacheminement, et le dispositif terminal ajoute le décalage dédié à la porteuse de réacheminement à la RSRP de l'une de la pluralité de fréquences porteuses afin de réduire la probabilité qu'une cellule correspondant à la fréquence porteuse soit sélectionnée.

4. Procédé selon l'une quelconque des revendications 1 à 3, dans lequel les informations de réacheminement comprennent un temps d'attente prolongé, et le temps d'attente prolongé indique une durée pendant laquelle le dispositif terminal attend avant de rechercher de nouveau dans la première cellule pour établir une connexion RRC.

5. Dispositif terminal, comprenant des unités adaptées à réaliser le procédé selon l'une quelconque des revendications 1 à 4.

6. Support de stockage lisible par ordinateur, dans lequel le support de stockage lisible par ordinateur stocke des instructions, et lorsque les instructions sont exécutées sur un dispositif terminal, le dispositif terminal est en mesure de réaliser le procédé selon l'une quelconque des revendications 1 à 4.

7. Produit-programme informatique comprenant des instructions, dans lequel, lorsque le produit-programme informatique est exécuté sur un dispositif terminal, le dispositif terminal est en mesure de réaliser le procédé selon l'une quelconque des revendications 1 à 4.
